**Europäisches Patentamt**

**European Patent Office**

**Office européen des brevets**

(19)

(11) Veröffentlichungsnummer: **0 228 397**
**B1**

(12) # EUROPÄISCHE PATENTSCHRIFT

(45) Veröffentlichungstag der Patentschrift:
**06.09.89**

(51) Int. Cl.⁴: **C 08 F  2/32**

(21) Anmeldenummer: **86903379.5**

(22) Anmeldetag: **19.06.86**

(86) Internationale Anmeldenummer:
**PCT/EP 86/00362**

(87) Internationale Veröffentlichungsnummer:
**WO 86/07596  (31.12.86 Gazette 86/28)**

(54) **VERFAHREN ZUR HERSTELLUNG VON KONZENTRIERTEN EMULSIONSPOLYMERISATEN.**

(30) Priorität: **22.06.85 DE 3522419**

(43) Veröffentlichungstag der Anmeldung:
**15.07.87 Patentblatt 87/29**

(45) Bekanntmachung des Hinweises auf die Patenterteilung:
**06.09.89 Patentblatt 89/36**

(84) Benannte Vertragsstaaten:
**AT BE CH DE FR GB IT LI NL SE**

(56) Entgegenhaltungen:
**DE-A- 2 064 101**
**US-A- 4 154 910**

**Chemicals Abstracts, Band 88, Nr 14, 3. April 1978,**
**Colombus, Ohio (US), S. 29, Zusammenfassung 90451s**
**& JP-A-77111986**

(73) Patentinhaber: **Chemische Fabrik Stockhausen GmbH,**
**Bäkerpfad 25, D-4150 Krefeld (DE)**

(72) Erfinder: **HÜBNER, Wolfgang, Möhlenring 61,**
**D-4152 Kempen 1 (DE)**
Erfinder: **SCHROERS, Otto, Dohrhofsweg 1,**
**D-4150 Krefeld (DE)**

(74) Vertreter: **Klöpsch, Gerald, Dr.-Ing., An Gross St.**
**Martin 6, D-5000 Köln 1 (DE)**

ACTORUM AG

## Beschreibung

Polyelektrolyte werden als flüssige Dispersionen unter der Bezeichnung «Emulsionspolymerisate» in der Technik bei der Wasser- und Abwasser-Aufbereitung und in verschiedenen Herstellungsprozessen als Flockungs-, Entwässerungs- und Retentionshilfsmittel, als viskositäts- bildende Zusätze bei der Exploration und Erdöl-Gewinnung, bei der Herstellung von Textilien und neuerdings in kosmetischen Zubereitungen verwendet.

Die Herstellung der Emulsionspolymerisate geschieht nach DE-C- 1089173 durch radikalische Polymerisation wasserlöslicher Monomerer, bevorzugt Acrylamid und anderer Acrylsäurederivate, die in der dispersen, wäßrigen Phase feinteiliger Wasser-in-Öl-Emulsionen enthalten sind.

Der wirtschaftliche Einsatz dieser Produkte ist gegeben, wenn der Polymerisatanteil im Produkt (gelöst in Wasser) die geforderte anwendungstechnische Effektivität besitzt, und wenn der Polymerisatanteil im Produkt neben den nicht wirksamen Anteilen (hydrophobe Phase, gebildet aus den flüssigen Kohlenwasserstoffen und Emulgatoren sowie Wasser) ausreichend hoch ist. Es ist daher erwünscht, möglichst hochkonzentrierte Emulsionspolymerisate bereitzustellen.

Die Konzentration des Polymerisat-Anteils wird bei der Herstellung der Emulsionspolymerisate neben der Löslichkeit der Monomeren dadurch gekennzeichnet, daß die radikalische Polymerisation der genannten Monomeren ein schnell ablaufender, stark exothermer Vorgang ist, so daß die proportional zur Konzentration der Monomeren und zur Geschwindigkeit der Polymerisation entstehende Reaktionswärme abgeführt werden muß. Zur Lösung der Problemstellung wurden bisher neben dem bekannten Monomeren-Zulauf-Verfahren einige andere Herstellungsverfahren beschrieben. In der US-A- 3 767 629 wird zur Steuerung des Polymerisationablaufs die Inhibierung der Polymerisation durch sporadische Luftzufuhr zur Monomeren - Emulsion - vorgeschlagen. In der DE-OS 28 11 422 wird eine Verringerung der Polymerisationsgeschwindigkeit durch den Zusatz von Schwermetallionen in der Monomerenphase vorgeschlagen. Die genannten Verfahren weisen jedoch den Nachteil auf, daß die Polymerisationreaktion oft zu stark inhibiert wird, so daß die Polymerisation insgesamt beeinträchtigt wird und die Qualität der Polymerisate nicht den optimal möglichen Stand erreicht.

Nach US-A- 4 070 321 wird zur Herstellung hochmolekularer anionischer Polymerisate die Reaktion durch Einstellung des pH-Wertes der Monomeren-Phase beeinflußt. Die Regulierung der Polymerisation über den pH-Wert der wäßrigen Phase ist jedoch zur Herstellung konzentrierter Produkte nicht ausreichend.

Es ist auch bereits bekannt, zur Herstellung konzentrierter Produkte in zwei Stufen zu arbeiten:

In den ersten Stufe werden niedrig konzentrierte Produkte nach dem adiabatischen Verfahren hergestellt, und in der zweiten Stufe wird anschließend durch Destillation unter erneuter Wärmezufuhr, gegebenenfalls auch unter Zufügen von azeotrop mit Wasser destillierenden Kohlenwasserstoffen eine Steigerung des Polymerisatgehaltes durch Abtrennen von Wasser und einem geringen Anteil der Kohlenwasserstoffe erreicht (US-A- 4021 399 und US-A- 4090 992). Dieses Verfahren ist durch einen zusätzlichen Energie- und Zeitaufwand belastet. Weiterhin ist es notwendig, die Polymerisate durch besondere Zusätze zu stabilisieren (US-A- 3 507 840), damit ihre anwendungstechnische Wirksamkeit über einen längern Zeitraum erhalten bleibt. Weiter ist es auch bereits bekannt, die Polymerisationwärme durch Siede-Rückflußkühlung bei Unterdruck abzuführen (DD-PS 145 401 und US-A- 4 078 133). Dieses Verfahren besitzt den Nachteil, daß die rückfließende, freie Wassermenge zur Inhomogenität in der Wasser-in-Öl-Polymerisat-Dispersion führen kann und den im Produkt virksamen Polymerisatanteil verdünnt.

Die Technik des Aufkonzentrierens durch azeotrope Destillation fertiger Polymerisatdispersionen wurde nach DE-A- 3224994 in jüngster Zeit insbesondere durch geeignete apparative Maßnahmen verbessert, ohne jedoch die genannten Nachteile eines solchen zweistufigen Verfahrens zu beseitigen.

Ausgehend von dem vorstehend beschriebenen Stand der Technik ist Aufgabe der Erfindung die Schaffung eines Verfahrens, mit dem stabile Emulsionspolymerisate mit einem hohen Polymergehalt von hoher Qualität in einem Verfahrensschritt hergestellt werden können.

Diese Aufgabe wird erfindungsgemäß durch eine besondere Führung der Polymerisation erreicht, wodurch sowohl eine Steuerung der Geschwindigkeit der radikalischen Polymerisation des wasserlöslichen Monomeren in der Wasser-in-Öl-Emulsion als auch eine Anhebung der Polymerisatkonzentration im Endprodukt erzielt wird.

Gegenstand der Erfindung ist somit ein Verfahren zur Herstellung von konzentrierten Dispersionen wasserlöslicher oder wasserquellbarer Emulsionspolymerisate durch Polymerisation wenigstens eines wasserlöslichen Monomeren in einer Wasser-in-Öl-Dispersion mittels Polymerisationsinitiatoren, gegebenenfalls in Gegenwart von bi- oder multifunktionellen Vinyl- oder Allylverbindungen, das dadurch gekennzeichnet, daß eine Wasser-in-Öl-Dispersion des Ausgangsmonomeren unter Rühren und unter Steuerung der Polymerisation durch die Wahl geeigneter Temeratur- und Druckbedingungen derart polymerisiert wird, daß die Polymerisationswärme als Verdampfungswärme bei der destillativen Entfernung von im Reaktionsgemisch enthaltenem Waser abgeführt wird, wodurch sowohl Polymerisationswärme als auch Wasser aus der W/Ö-Polymerisat-Dispersion abgeführt werden.

Daß es mit der erfindungsgenäßen Arbeitsweise gelingt, ausgehend von Wasser-in-Öl-Monomeremulsionen die Polymerisation zu steuern und gleichzeitig ein aus Wasser und gegebenenfalls geringen Anteilen des flüssigen Kohlenwasserstoffs der Emulsion bestehendes Gemisch als Destillat abzutrennen, ohne die Monomeren- bzw. Polymerisat-Dispersion zu zerstören bzw. die Verhältnisse während der Polymerisation durch Enfernung der Komponente Wasser zu ändern, ohne daß die Produktqualität nachteilig verändert wird, muß überraschen, Erfindungsgemäß wird die Polymerisationstemperatur über den im Reaktionsgefäß herrschenden Druck eingestellt bzw. gesteuert.

Bevorzugt wird der Druck im Reaktionssystem so eingestellt, daß die Polymerisationstemperatur im Bereich von 20 bis 70, vorzugsweise von 30 bis 50°C liegt. Die Polymerisation wird bei Unterdruck, vorzugsweise im Bereich von 10 bis 150 mbar durchgeführt. Gemäß einer weiteren Ausführungsform wird die Polymerisation unter wenigstens annähernd isothermen Bedingungen durchgeführt. Sie kann aber auch gemäß einer weiteren Ausführungsform der Erfindung in einer ersten Phase annähernd isotherm bei tieferen Temperaturen im Bereich von 20 bis 70°C, vorzugsweise 30 bis 50°C durchgeführt und danach entweder annähernd isotherm bei höheren Temperaturen von 50°C bis 80°C, vorzugsweise 50 bis 70°C oder unter adiabatischen Bedingungen beendet werden. Die Polymerisation unter adiabatischen Bedingungen kann dann erfolgen, wenn die Polymerisation soweit fortgeschritten ist, daß die kurzfristig freiwerdende Polymerisationswärme nicht zur Erwärmung des Ansatzes auf den Siedepunkt der Dispersion (Monomeren-Emulsion und Emulsionspolymerisat) führt. Die Polymerisation unter adiabatischen Bedingungen ist ausgeschlossen, wenn hohe Temperaturen während der Polymerisation die Produkteigenschaften negativ beeinflussen.

Die Emulsion der Ausgangsmonomeren wird auf bekannte Weise aus der wäßrigen Monomerenlösung und der hydrophoben Phase gebildet. Die Monomerkonzentration in der wäßrigen Lösung wird dabei so gewählt, daß hohe Polymerisatanteile im Endprodukt erhalten werden, und die Stabilität der Dispersion in allen Herstellungsphasen erhalten bleibt. Erfindungsgemäß kann bereits von konzentrierten Monomerenlösungen ausgegangen werden. Typische Konzentrationen liegen im Bereich von 40 bis 80 Gew.-%. Vorteilhaft kann aber auch von geringer konzentrierten Lösungen ausgegangen werden, die im Lauf des erfindungsgemäßen Verfahrens dann zu konzentrierten Polymerisat-Dispersionen aufkonzentriert werden. Diese Verfahrenweise gestattet es, preiswerte Rohstoffe im Form geringer konzentrierter Monomerenlösungen einzusetzen. Typische Konzentrationen solcher niedriger konzentrierter Monomerenlösungen liegen im Bereich von 15 bis 40%, bevorzugt von 30 bis 40%.

Als Monomere sind wasserlösliche, radikalisch polymerisierbare Verbindungen geeignet. Beispiele nichtionogener Monomerer sind Acryl- und Methacrylamid, die Hydroxyalkylester der Acryl- oder Methacrilsäure, vorzugsweise 2-Hydroxyethyl- und 2-Hydroxypropylester, Vinylpyrrolidon und N-Vinylacetamid. Beispiele anionischer Monomerer sind α- β - ungesättigte Mono- und/oder Dicarbonsäuren, wie Acryl-, Methacryl-, Itacon-, Malein- und Fumarsäure, deren wasserlösliche Salze, ferner Vinylsulfonsäure, Acrylamidoalkansulfonsäuren, Phenylvinylphosphonsäuren und deren Salze. Als kationisch wirksame Monomere sind Aminoalkylester und Aminoalkylamide ungesättigter, radikalisch polymerisierbarer Carbonsäuren, beispielsweise 2-Dimethyl- bzw. 2-Dietyl-aminoethyl-, 2-Dimethylaminopropyl-, 4-Dimethylaminobutyl,3-Dimethyl- aminoneopentyl, Morpholinoethyl- und Piperidinethylester der Acryl- oder Methacrylsäure sowie Vinylpyridin, Vinylimidazol, Vinylimidazolin und Vinylimidazolidin sowie deren Quaternierungsprodukte und Salze. Anteile wenig oder schlecht wasserlöslicher Monomerer sind verwendbar, wenn das Monomerengemisch insgesamt wasserlöslich bleibt.

Zur Herstellung wasserunlöslicher, jedoch in Wasser quellbarer Polymerisat-Dispersionen können bi- oder multifunktionelle Vinyl- oder Allylverbindungen z.B. Methylenbisacrylamid, verwendet werden.

Als Grundlage der hydrophoben Phase werden paraffinische, isoparaffinische, naphthenische und aromatische flüssige Kohlenwasserstoffe, ggfs. auch deren halogenierte Derivate eingesetzt, z.B. n-Paraffine, sowie Gemische aus den genannten Kohlenwasserstoffen u.a. Als Emulgatoren zur Bildung der Wasser-in-Öl-Emulsion werden vorzugsweise Sorbitanfettsäureester, Glycerinfettsäureester, aber auch andere Wasser-in-Öl-Emulgatoren z.B. nach DE-A- 2455 287 aus Fettalkoholglycidyläthern mit mehrwertigen Alkoholen herstellbare Emulgatoren eingesetzt. Weiterhin kann die Stabilität der Monomerenemulsion durch Kombination von Wasser-in-Öl-Emulgatoren mit Öl-in-Wasser-Emulgatoren, beispielsweise von Sorbitanmonooleat mit ethoxylierten Fettsäuren oder Fettalkoholen, wie in D-A- 23 33 927 angegeben, erreicht werden. Die aus den Komponenten gebildete Wasser-in-Öl-Emulsion wird ggfs. durch eine gesonderte Behandlung bis zum Erreichen bestimmter Viskositätszahlen der Emulsion homogenisiert.

Der für die Polymerisation geeignete Behälter ist mit Rührwerk, Destillationsaufsatz und Kühler sowie mit Gaseinleitung, Tauchrohr, mit Temperaturmeßfühler und einer entsprechenden Anzeige sowie mit einer Druckanzeige ausgestattet.

Vor der Polymerisation wird die Emulsion in bekannter Weise mit Inertgas z.B. mit Stickstoff oder Kohlendioxid zur Enfernung des Sauerstoffs gespült. Der Sauerstoff kann auch durch mehrmaliges Evakuieren und Spülen der Emulsion mit Stickstoff entfernt werden.

Die Polymerisation kann mit den bekannten Radikalbildnern durch Erwärmen der Monomerenemulsion gestartet werden, z.B. mit 2,2-Azoisobuttersäuredinitril, 2,2-Azobis-(2-amidinopropan) dichlorid, 4,4-Azo-bis-(4-cyanvaleriansäure), Peroxocarbonaten und Peroxiden, wie tert.-Butylhydroperoxid, Dibenzoylperoxid, sowie Persulfaten, wie Kaliumperoxidisulfat.

Von Monomeren-Emulsionen bei Raumtemperatur oder in gekühltem Zustand ausgehend, kann die Polymerisation durch Zusatz eines Redox-Systems als Starter, z.B. durch Zusatz von wässrigen Lösungen von Natriumdithionit und Kaliumperoxidisulfat initiiert werden. Hierbei wird durch die exotherme Polymerisation die Monomeren-Emulsion erwärmt und die Polymerisation durch den termischen Zerfall eines zweiten in der Emulsion befindlichen Starters fortgeführt.

Die erwünschte Polymerisationstemperatur im Bereich von 20 bis 70°C wird über den Druck im Polymerisationsgefäß eingestellt bzw. gesteuert. Nach Evakuierung des Polymerisationsgefäßes wird die Polymerisation bei entsprechendem Unterdruck gestartet und durchgeführt, wobei sich Drucke im Bereich von 10 bis 150 mbar als vorteilhaft gezeigt haben. Polymerisationstemperatur bzw. Druck im Reaktionssystem werden so gewählt, daß die Polymerisation mit ausreichender Reaktionsgeschwindigkeit abläuft. Mit Beginn der Polymerisation steigt der Partial-Dampfdruck des Wassers und der flüssigen Kohlenwasserstoffe über der Monomeren-Emulsion. Bei Erreichen des eingestellten Unterdrucks beginnt das Wasser aus der polymerisierenden Emulsion zu destillieren. Der Wasserdampf wird zur Aufrechterhaltung des gewählten Unterdrucks im Reaktionsgefäß durch wirksame Kühlaggregate geleitet und in einer Vorlage, ggfs. zusammen mit geringen Anteilen des flüssigen Kohlenwasserstoffs, kondensiert. Auf diese Weise wird die bei der Polymerisation freiwerdende Wärme aus dem System abgeführt. Gleichzeitig wird durch das Abtrennen des Destillats die Konzentration der entstehenden Polymerisat -Dispersion erhöht.

Die Polymerisation kann ggfs. zusätzlich durch bekannte Maßnahmen, wie Außenkühlung, Inhibierung durch Lufteinblasen etc. beeinflußt werden. Nach Enfernung begrenzt eingebrachter Luftsauerstoffmengen durch das erneute Anlegen des Vakuum, läuft die Polymerisation selbsttätig, d.h. ohne erneute Starterzugabe weiter.

Der Reaktionsumsatz kann, wenn keine anderen Maßnahmen zum Wärmeaustausch während der Destillation durchgeführt werden, leicht anhand der Destillatmenge kontrolliert werden. Die Reaktion ist mit dem Abklingen der Wärmetönung und Destillation beendet.

Das Destillat kann in Wasser und ggfs. geringe Anteile flüssige Kohlenwasserstoffe aufgeteilt werden, die beide als Rohstoff wiederverwendbar sind. Bei der Verwendung von 2,2-Azoisobuttersäuredinitril als Starter muß das Destillat vor der erneuten Verwendung von Anteilen dieser Substanz durch Filtrieren befreit werden, die bei der Destillation mit dem Dampf übergehen.

Nach dem erfindungsgemäßen Verfahren werden durch Polymerisation wasserlöslicher Monomerer in Form der Wasser-in-Öl-Emulsion beständige Emulsionspolymerisate mit einem hohen Polymergehalt in einem Verfahrensschritt hergestellt, in dem die Polymerisationswärme als Verdampfungswärme zum Abdestillieren von Wasser aus dem Reaktionssystem während der Polymerisation genutzt wird. Im Gegensatz zu den bisher bekannten Verfahren zur Herstellung von wasserlöslichen Polymerisationsverfahren wird zur Anhebung der Konzentration keine zusätzliche Wärmeenergie verwendet.

Das Verfahren gestattet es, preiswerte Rohstoffe in Form geringer konzentrierter Lösungen der Monomeren zur Herstellung von konzentrierten Polymerisat-Dispersionen zu verwenden.

Die Steuerung der Polymerisation durch die Wahl geeigneter Temperatur- und Druckbedingungen und der gute Entzug der Polymerisationswärme ermöglicht bei diesem Verfahren die großtechnische Herstellung anwendungstechnisch sehr effektiver Polymerisate, die u.a. als Flockungs-, Retentions- und Entwässerungshilfsmittel sowie als Zusatz zu Flutwässern bei der Erdölförderung besonders geeignet sind.

Überraschenderweise wird erfindungsgemäß durch Rühren, insbesondere Rühren mit hoher Turbulenz, eine zügige Polymerisation erreicht, ohne daß ein Abbruch der Reaktion erfolgt. Demgegenüber wird bei anderen Verfahren, z.B. nach DE-A-3 207 113, starkes Rühren als nachteilig, weil die Polymerisationsreaktion abbrechend, beschrieben.

*Beispiel 1:*

Das Reaktionsgefäß ist mit Rührer, Thermometer, absteigendem Kühler, Vakuumanschluß und einem RTC-Vakuum-Regler der Fa. Reichelt Chemietechnik GmbH & Co, Heidelberg, Kat.-Nr. 95412 versehen.

Eine Lösung aus 220,20 g Acrylamid, 190,02 g Wasser und 119,44 g Acrylsäure wird durch Zugabe von 204,77 g Kalilauge, 45%ig, neutralisiert und auf pH 7,8 eingestellt.

In einem Becherglas werden 35,39 g Sorbitanmonoisostearat in 216,47 g Isopar M (Esso; isoparaffinisches Kohlenwasserstoffgemisch mit einem Siedebereich von 204 bis 247° und einer Dichte bei 12°C von 0,786 g/cm³) zur hydrophoben Phase gelöst. Durch Eingießen der wäßrigen Manomerenlösung (Konzentration 54,0%) in die hydrophobe Phase unter Rühren wird die Wasser-in-Öl-Emulsion gebildet. Die Emulsion wird mit einem Mixstab (Krups-3-Mix) 60 Sekunden homogenisiert und zeigt danach eine Viskosität von 4.560 mPa · s.

Die Emulsion wird nach Zufügen von 0,34 g 2,2'-Azoisobuttersäuredinitril in das Reaktionsgefäß gegeben und ca. 30 Minuten unter Rühren mit Stickstoff gespült. Anschließend wird die Emulsion in einem Bad langsam erwärmt, Rührgeschwindigkeit auf 300 UpM, und der Druck im Gefäß durch Anschließen an eine Wasserstrahlpumpe über den RTC-Regler auf 55 mbar eingestellt. Nach kurzer Zeit ist die Emulsion auf 40°C erwärmt und die Polymerisation setzt, erkennbar am Beginn der Destillation, ein. Bei 58°C wird das Bad entfernt und das Reaktionsgemisch isoliert. Der Polymerisationsverlauf ist anhand der in der Tabelle zusammengefaßten Daten zu verfolgen.

| Zeit (Min.) | Temp. (°C) | Bad. Temp. (°C) | Druck (mbar) | |
|---|---|---|---|---|
| 0 | 36,0 | 65 | 55 | |
| 2 | 40,0 | 64 | | Ansatz beginnt zu sieden; |
| 7 | 46,0 | 61 | | Beginn der Destillation |
| 13 | 48,0 | 58 | | |
| 15 | 48,0 | isoliert | 55 | |
| 18 | 46,0 | | 50 | |

| Zeit (Min.) | Temp. (°C) | Bad. Temp. (°C) | Druck (mbar) | |
|---|---|---|---|---|
| 21 | 47,0 | | | |
| 28 | 49,0 | | | |
| 34 | 47,0 | | | |
| 38 | 46,0 | | 50 | |
| 41 | 50,0 | | 45 | |
| 43 | 48,0 | | | |
| 51 | 47,0 | | | Ende der Destillation |
| 55 | 48,0 | | | |
| 62 | 48,0 | | 45 | |
| 72 | 48,0 | | 50 | |
| 77 | 47,5 | | 50 | |
| 83 | 46,5 | | 45 | |
| 105 | 44,0 | | belüftet | |

Nach dem Abklingen der Reaktion wird das Reaktionsgefäß belüftet und die Polymerisat-Dispersion abgelassen. Während der Polymerisation wurden 171,0 g Destillat erhalten.

Die Polymerisat-Dispersion besitzt eine Viskosität von 2.000 mPa · s. Die unter Verwendung eines Netzmittels, z.B. Nonylphenol-9 EO, hergestellte 0,5%ige Lösung (bez. auf Polymerisat) hat eine Viskosität von 8.700 mPa · s. Das Produkt ist in feststoffhaltigen, wäßrigen Trüben als Flockungshilfsmittel wirksam. Zur Charakterisierung kann das Flockungsverhalten und die Sedimentation an einer Modelltrübe bestimmt werden.

Hierzu wird ein 250 ml-Prüfzylinder (Durchmesser 50 mm) mit in einer Tontrübe (Stammberge I), hergestellt durch intensives Mischen von 20 g Blauton der Grube Witterschlick (bei Bonn) und 1 l Wasser, gefüllt. Die Trübe wird mit einem einfach gekröpften Stabrührer mit 300 U/Min. gerührt und eine Lösung des Polymerisats in ppm-Menge zupipettiert. Nach Abstellen des Rührwerkes wird die Zeit in Sekunden gemessen, welche die Oberfläche des Flockenbetts benötigt, um von der 250 ml Markierung auf die 170 ml Markierung des Prüfzylinders zu sinken. Die gemessene Zeit wird als «Flockungswert» angegeben.

Zur Prüfung von kationischen Polyelektrolyten werden der Tontrübe im Prüfzylinder 1,25 ml einer 20 %igen Lösung von $Al_2(SO_4)_3 \cdot 18H_2O$ zugesetzt (Stammberge II).

(Die Flockungswerte an Stammberge I (Witterschlick Ton) bestimmt aus 0,001 %iger Lösung betragen

bei 1 ppm 3,5 sec,
bei 0,5 ppm 7,3 sec,

Der Polymerisatgehalt der Dispersion beträgt 49,3%, der Wassergehalt 19,8%.

*Beispiel 2:*

Die Herstellung geschieht unter den gleichen apparativen Bedingungen wie in Beispiel 1.

Die wäßrige Monomerenlösung wird aus 336,56 g Wasser, 337,44 g Acrylamid und 311,72 g einer 80%igen wäßrigen Lösung von Acrylsäure-trimethylammoniumethylesterchlorid hergestellt und mit ca. 6,5 ml Salzsäure, 30%ig, auf pH 4,4 eingestellt. Die hydrophobe Phase wird durch Mischen von 14,0 g Sorbitanmonoisostearat und 396,0 g Isopar M (Esso) erhalten.

Durch Eintragen der wäßrigen Lösung in die hydrophobe Phase wird die Wasser-in-Öl-Emulsion gebildet, die 60 Sekunden mit einem Krups-3-Mixer homogenisiert und auf eine Viskosität von 840 mPa · s eingestellt wird. 1.240 g der Emulsion werden in das Reaktionsgefäß zusammen mit 0,3 g 2,2'-Azoisobuttersäuredinitril gegeben und unter Rühren mit 250 UpM während 20 Minuten durch Anschluß an eine Wasserstrahlpumpe vom Luftsauerstoff befreit. Über den RTC-Vakuum-Regler wird der Druck im Reaktionsgefäß zu Beginn der Polymerisation auf 70 mbar eingestellt und die Reaktion durch Zugabe von 0,23 ml einer 0,5%igen Natriumdithionit-Lösung gestartet. Temperatur- und Druckwerte während des Polymerisationsverlaufs können der Tabelle entnommen werden.

| Zeit (Min.) | Temp. (°C) | Druck (mbar) | |
|---|---|---|---|
| 0 | 23 | 70 | + 0,23 ml 0,5% $Na_2S_2O_4$ i.W. |
| 4 | 34,5 | 44 | |
| 18 | 37,5 | 64 | |
| 27 | 40 | 64 | |
| 34 | 44,5 | 64 | Beginn der Destillation |
| 46 | 44,5 | 64 | |
| 66 | 44 | 62 | |
| 81 | 41,5 | 59 | |
| 114 | 43 | 58 | ca. 80 ml Destillat |
| 125 | 50 | 1.000 | mit $N_2$-belüftet |
| 132 | 58,5 | 1.000 | |
| 145 | 70,5 | 1.000 | Ende der Polymerisation |

Bei 44,5°C und 64 mbar beginnt die Destillationsphase; nachdem ca. 80 ml Destillat erhalten wurde, wird der Druck über den RTC-Vakuum-Regler erhöht und die Polymerisation adiabatisch unter Temperaturanstieg bis auf 70,5°C zu Ende geführt. Anschließend wird die Polymerisat-Dispersion durch erneutes Abdestillieren bei 50 mbar abgekühlt. Insgesamt werden 121,0 g Destillat abgetrennt. Die Polymerisat-Dispersion wird unter Rühren mit 11,2 g einer 20%igen, wäßrigen Natriumdithionit-Lösung und danach mit 11,2 g eines $C_{12}$-$C_{18}$ Fettalkohol-5-EO-oxethylats versetzt. Das Produkt besitzt eine Viskosität von 2.200 mPa · s. Die 1%ige Lösung (bez. auf den Polymerisatanteil) in vollentsalztem Wasser hat eine Viskosität von 3.800 mPa · s. (Flockungswert an Stammberge II (Witterschlick Ton) bestimmt aus 0,1%iger Lösung beträgt 3,4 sec bei Zugabe von 2 ppm).

Der Polymerisatgehalt der Dispersion beträgt 45,7% der Wassergehalt 20,4%.

*Beispiel 3:*

Die Herstellung erfolgt unter den gleichen apparativen Bedingungen wie im Beispiel 1.

Die wäßrige Monomerenlösung wird aus 193,2 g Wasser, 207,0 g Acrylsäure, 179,7 g Ammoniak, 25%ig, 0,045 g Methylenbisacrylamid sowie 0,13 2,2' Azo-bis-(2-amidinopropan)-hydrochlorid hergestellt. Dabei wird der pH-Wert der Lösung auf 5,84 eingestellt.

Die hydrophobe Phase wird durch Mischen von 200,1 g eines isoparaffinischen Kohlenwasserstoffgemisches (Siedebereich 204 - 247°C) mit 17,3 g Sorbitanmonoisostearat gebildet.

Durch Eintragen der wäßrigen Monomerenlösung in die hydrophobe Phase unter Rühren wird die Wasser-in-Öl-Emulsion gebildet, die 20 sec mit einem Krupp-3-Mixer homogenisiert und auf eine Viskosität von 1400 mPa · s eingestellt wird.

780 g der Monomeren-Emulsion werden in das Reaktionsgefäß gegeben und unter Rühren (250 UpM) in 20 Minuten durch Anschluß an eine Wasserstrahlpumpe vom Sauerstoff befreit. Über den RTC-Vakuum-Regler wird der Druck im Reaktionsgefäß zum Beginn der Polymerisation auf 70 mbar eingestellt und die Wasser-in-Öl-Emulsion auf 42°C erwärmt. Danach wird das Reaktionsgefäß isoliert.

Die Temperatur- und Druckwerte während des Polymerisationsverlaufs sind der folgenden Tabelle zu entnehmen.

| Zeit (Min.) | Temp. (°C) | Druck (mbar) | |
|---|---|---|---|
| 0 | 21 | 70 | |
| 9 | 42 | | Isolation ohne Heizung |
| 10 | 42 | | Beginn der Destillation |
| 20 | 44 | | |
| 23 | 45 | | |
| 24 | 45,5 | 78 | |
| 68 | 44,5 | 70 | ca. 45 ml Destillat |
| 79 | 60 | | |
| 85 | 74 | | |
| 126 | 78,5 | | |
| 134 | 78,0 | 70 | |

Das Emulsionspolymerisat wird durch Abdestillieren von Wasser im Vakuum auf 30°C abgekühlt. Insgesamt werden 80 g als Destillat abgetrennt.

Unter Rühren werden 3,0 g ethoxyliertes Nonylphenol sowie 3,0 g Ammoniak, 25%ig, zugefügt. Der Polymerisatgehalt der homogenen Dispersion beträgt 33,7%.

Bei Zugabe von 0,5% Polymerisat zu Wasser erfolgt ein Viskositätsanstieg auf 46000 mPa · s.

**Patentansprüche**

1. Verfahren zur Herstellung von konzentrierten Dispersionen wasserlöslicher oder in Wasser quellbarer Emulsionspolymerisate durch Polymerisation wenigstens eines wasserlöslichen Monomeren in einer W/Ö-Dispersion mittels Polymerisationsinitiatoren, gegebenenfalls in Gegenwart von bi- oder multifunktionellen Vinyl- oder Allylverbindungen, dadurch gekennzeichnet, daß eine W/Ö-Dispersion des Ausgangsmonomeren unter Rühren und unter Steuerung der Polymerisation durch die Wahl geeigneter Temperatur- und Druckbedingungen derart polymerisiert wird, daß die Polymerisationswärme als Verdampfungswärme bei der destillativen Entfernung von im Reaktionsgemisch enthaltenem Wasser abgeführt wird, wodurch sowohl Polymerisationswärme als auch Wasser aus der W/Ö-Polymerisat-Dispersion abgeführt werden.

2. Verfahren nach Anspruch 1, dadurch gekennzeichnet, daß die Polymerisationstemperatur über den Systemdruck eingestellt wird.

3. Verfahren nach Ansprüchen 1 bis 2, dadurch gekennzeichnet daß der Systemdruck derart eingestellt wird, daß die Polymerisationstemperatur im Bereich von 20 bis 70, vorzugsweise von 30 bis 50° liegt.

4. Verfahren nach Ansprüchen 1 bis 3, dadurch gekennzeichnet, daß die Polymerisation bei Unterdruck, vorzugsweise im Bereich von 10 bis 150 mbar durchgeführt wird.

5. Verfahren nach einem der Ansprüche 1 bis 4, dadurch gekennzeichnet, daß die Polymerisation unter wenigstens annähernd isothermen Bedingungen durchgeführt wird.

6. Verfahren nach einem der Ansprüche 1 bis 4, dadurch gekennzeichnet, daß die Polymerisation in einer ersten Phase bis zu einem Monomeren-Umsatz von bis zu 60%, bezogen auf die gesamte Monomerenmenge, im Bereich von 20°C bis 70°C, vorzugsweise von 30°C bis 50°C durchgeführt wird und dann die Polymerisation der noch vorhandenen Monomeren annähernd isotherm bei höheren Temperaturen von 50°C bis 80°C, vorzugsweise von 50°C bis 70°C, oder unter adiabatischen Bedingungen beendet wird.

**Claims**

1. A process for the production of concentrated dispersions of water-soluble or water-swellable emulsion polymers, by polymerisation of at least one water-soluble monomer in a water-in-oil dispersion by means of polymerisation initiators, optionally in the presence of bi- or multifunctional vinyl or allyl compounds, characterized in that a water-in-oil dispersion of the starting monomer is polymerized with stirring and controlling of the polymerisation by the choice of suitable temperature and pressure conditions such that the polymerisation heat is eliminated as heat of vaporization in the distillative removal of the water contained in the reaction mixture, thus achieving the elimination of the polymerisation heat as well as the water from the w/o-polymer-dispersion.

2. A process according to claims 1, characterized in that the polymerisation temperature is adjusted by the system pressure.

3. A process according to claims 1 or 2, characterized in that the system pressure is adjusted such that the polymerisation temperature is in the range of 20 to 70°C, preferably of 30 to 50°C.

4. A process according to claims 1 to 3, characterized in that the polymerisation is carried out under vacuum, preferably in the range of 10 to 150 mbar.

5. A process according to claims 1 to 4, characterized in that the polymerisation is carried out under conditions that are at least approximately isothermic.

6. A process according to claims 1 to 4, characterized in that the polymerisation is carried out in a first phase up to a monomer conversion of up to 60%, relative to the total quantity of monomers, in the range from 20°C to 70°C, preferably from 30°C to 50°C, and then the polymerisation of the remaining monomers is terminated almost isothermically at higher temperatures of 50°C to 80°C, preferably of 50°C to 70°C, or under adiabatic conditions.

## Revendications

1. Procédé de préparation de dispersions concentrées de polymères en émulsion solubles dans l'eau ou gonflables à l'eau par la polymérisation d'au moins un monomère soluble dans l'eau, dans une dispersion eau/huile, à l'aide d'amorceurs de polymérisation, éventuellement en présence de composés allyliques ou vinyliques bi- ou multifonctionnels, caractérisé en ce que l'on polymérise une dispersion eau/huile du monomère de départ sous agitation et conduite de la polymérisation par le choix de conditions de température et de pression appropriées, en manière telle que la chaleur de polymérisation soit évacuée sous forme de chaleur d'évaporation lors de l'élimination par distillation de l'eau contenue dans le mélange réactionnel, si bien que, de ce fait, aussi bien la chaleur de polymérisation qu'également l'eau soient éliminées de la dispersion de polymère-eau/huile.

2. Procédé suivant la revendication 1, caractérisé en ce que l'on règle la température de polymérisation sur la pression du système.

3. Procédé suivant les revendications 1 et 2, caractérisé en ce qu'on règle la pression du système de telle façon que la température de polymérisation fluctue dans la plage de 20 à 70°, de préférence 30 à 50°.

4. Procédé suivant les revendications 1 à 3, caractérisé en ce que l'on réalise la polymérisation sous une pression inférieure à la pression atmosphérique, de préférence dans la plage de 10 à 150 mbars.

5. Procédé suivant l'une des revendications 1 à 4, caractérisé en ce que l'on réalise la polymérisation dans des conditions au moins approximativement isothermiques.

6. Procédé suivant l'une des revendications 1 à 4, caractérisé en ce que l'on réalise la polymérisation, au cours d'une première phase, jusq'à une conversion des monomères allant jusqu'à 60% par rapport à la proportion globale des monomères, dans la plage de 20°C à 70°C, de préférence de 30°C à 50°C, et on achève ensuite la polymérisation des monomères encore présents dans des conditions approximativement isothermiques, à des températures supérieures qui varient de 50°C à 80°C, de préférence de 50°C à 70°C, ou dans des conditions adiabatiques.